# EUROPÄISCHE PATENTSCHRIFT

(11) **EP 2 145 173 B1**
(45) Veröffentlichungstag und Bekanntmachung des Hinweises auf die Patenterteilung: **11.05.2016**
(21) Anmeldenummer: 08717811.7
(22) Anmeldetag: 14.03.2008
(51) Int. Cl.: G01N 15/06

(54) **SENSOR ZUR DETEKTION VON TEILCHEN IN EINEM GASSTROM**
SENSOR FOR DETECTING PARTICLES IN A GAS FLOW
DÉTECTEUR PERMETTANT DE DÉTECTER DES PARTICULES DANS UN COURANT GAZEUX

(30) Priorität: 10.05.2007 DE 102007021910
(43) Veröffentlichungstag der Anmeldung: 20.01.2010
(73) Patentinhaber: Robert Bosch GmbH, 70442 Stuttgart (DE)
(72) Erfinder: ROESCH, Sabine, 71254 Ditzingen (DE); HASENKOX, Ulrich, 71254 Ditzingen (DE); BARTSCHERER, Peter, 66125 Dudweiler (DE); GRABIS, Johannes, 71106 Magstadt (DE); SCHMIDT, Ralf, 70839 Gerlingen (DE)
(86) Internationale Anmeldenummer: PCT/EP2008/053069
(87) Internationale Veröffentlichungsnummer: WO 2008/138661

(56) Entgegenhaltungen:
- WO-A-2004/097392
- DE-A1- 10 244 702
- DE-A1-102004 043 121

## Beschreibung

Die Erfindung betrifft einen Sensor zur Detektion von Teilchen in einem Gasstrom, ein Verfahren zu dessen Herstellung sowie dessen Verwendung.

### Stand der Technik

Aus dem Stand der Technik ist bekannt, dass die Konzentration von leitfähigen Teilchen, beispielsweise Rußpartikeln in einem Abgas durch Messung der durch Teilchenanlagerung hervorgerufenen Änderung der elektrischen Eigenschaften von zwei oder mehreren kammartig ineinander greifenden metallischen Elektroden (interdigitales Elektrodensystem) gemessen werden kann. Eine steigende Konzentration der sich auf der Sensoroberfläche anlagernden Teilchen führt zu einer Widerstands- bzw. Spannungsänderung zwischen den Elektroden. Bei einer konstant angelegten Spannung geht dies mit einer Änderung des Stromflusses einher. Zur Bestimmung der Teilchenkonzentration bzw. des Teilchenmassenstroms wird die Änderung des Stromes bzw. die Verringerung des Widerstandes des Elektrodensystems gemessen und mit der angelagerten Teilchenmasse korreliert. Alternativ dazu kann die angelagerte Teilchenmasse auch durch die Definition eines Schwellwertes (Auslöseschwelle) und Messung einer Sammelzeit bis zum Erreichen dieses Schwellwertes bestimmt werden. Sensoren, die auf einem derartigen Prinzip beruhen, welches als sammelndes Prinzip einzuordnen ist, werden als resistive Partikelsensoren bezeichnet. Zur Regeneration des Sensorelementes wird das Sensorelement bisher mit Hilfe einer Heizvorrichtung von den angelagerten Teilchen befreit. Derartige Sensoren werden von der DE 101 493 33 A1 sowie der WO 2003006976 A2 beschrieben.

Da die Elektroden direkt dem Abgas ausgesetzt sind, kann nachteilhafterweise eine Korrosion der Elektroden und eine Kontamination der Sensorfläche mit Stoffen auftreten, was sich störend auf die Messung auswirken kann. Der DE 103 19 664 A1 folgend, kann eine Korrosion der Elektroden durch das Überziehen der Elektroden mit einer Schutzschicht verhindert werden.

In DE 103 19 664 A1 wird der Leitfähigkeitsbereich der Schutz- und Funktionsschicht auf eine leicht geringere Leitfähigkeitschicht im Vergleich zu den anzulagernden Partikeln eingeschränkt. Dies führt jedoch dazu, dass bei einer Messung mit einer konstanten Spannung an den Elektroden die Schutzschicht selbst als eine Art Strombegrenzung fungiert und deshalb der theoretisch mögliche Signalhub nicht optimal genutzt wird.

### Offenbarung der Erfindung

Ein erfindungsgemäßer ein Sensor zur Detektion von Teilchen (51) in einem Gasstrom umfassend
- ein Elektrodensystem mit mindestens zwei Elektroden (12,13),
- welches auf einem Trägerelement (11) angeordnet ist, wobei
- mindestens zwei Elektroden (12, 13) des Elektrodensystems von einer elektrisch leitfähigen Schicht (14) überzogen sind, dadurch gekennzeichnet, dass
- die elektrisch leitfähige Schicht (14) bei Betriebstemperatur, also bei einer Temperatur in einem Bereich > 100°C bis ≤ 500°C, einen Widerstandswert von > 0,2 kΩ bis < 100 KΩ aufweist,
hat den Vorteil, dass die Amplitude des Messsignals gegenüber einem Sensor mit geringer leitender Schicht erhöht wird und damit eine effektivere und sensiblere Detektion von Teilchen ermöglicht wird. Zusätzlich wird die Effektivität, Sensitivität und Messgeschwindigkeit eines erfindungsgemäßen Sensors gegenüber herkömmlichen Sensoren dadurch erhöht, dass es im Gegensatz zu herkömmlichen Sensoren nicht mehr notwendig ist den Zeitpunkt abzuwarten, an dem die Elektroden durch sich anlagernde Teilchen kurzgeschlossen werden, um ein gültiges Messsignal zu erhalten. Darüber hinaus werden bei einem erfindungsgemäßen Sensor die Elektroden, insbesondere bei hohen Umgebungstemperaturen, vor Korrosion geschützt und die Temperaturstabilität des Sensors erhöht. Ferner wird durch eine erfindungsgemäße Auswahl der Materialien für die elektrisch leitfähige Schicht eine Kontamination der von der elektrisch leitfähigen Schicht gebildeten sensitiven Fläche mit unerwünschten Stoffen verhindert und damit die Querempfindlichkeit des Sensors verringert sowie die Vergiftungsresistenz des Sensors erhöht.

Der erfindungsgemäße Sensor kann in der Fahrzeug-, Industrie- und/oder Haustechnik, beispielsweise in einem Abgasstrom eines Kraftfahrzeuges mit einem Dieselmotor oder in einer Ölheizung oder in einem Werkstattmessgerät zur Abgasuntersuchung eingesetzt werden , wobei er je nach Anwendungsfall mit einer entsprechend ausgelegten Halterung versehen sein kann.

Beim Einsatz in einen Abgasstrang eines Kraftfahrzeuges ist der Sensor beispielsweise ein Russ-Partikel-Sensor, der Bestandteil eines so genannten On-Board-Diagnose-Systems ist. Eine Überwachung des Partikelausstoßes ist von besonderem Interesse, da der Rußpartikelausstoß in naher Zukunft, insbesondere von Fahrzeugen im Fahrbetrieb nach dem Durchlaufen eines Motors bzw. Dieselpartikelfilters (DPF), per gesetzlicher Vorschrift überwacht werden muss (On Board Diagnosis, OBD). Die vorliegende Erfindung kann darüber hinaus zur Überwachung eines Diesel-Partikel-Filters in dem Abgasstrang, das heißt zur Beladungsprognose von Dieselpartikelfiltern, eingesetzt werden. Eine Beladungsprognose von Dieselpartikelfiltern wird zur Regenerationskontrolle benötigt und ermöglicht sowohl eine hohe Systemsicherheit als auch den Einsatz von kostengünstigen Filtermaterialien.

Die Anwendung des beschriebenen Sensors ist nicht auf die Detektion von Rußpartikeln in Abgasen von Verbrennungsmotoren beschränkt. Der Sensor kann allgemein zur Detektion von Teilchen, welche den Gesamtwiderstand des Sensors bei Anlagerung und/oder Einlagerung verändern, beispielsweise in chemischen Herstellungsprozessen, Abluftanlagen oder Abluftnachbehandlungsanlagen, eingesetzt werden.

Weitere Vorteile und vorteilhafte Ausgestaltungen des erfindungsgemäßen Gegenstandes sind der Beschreibung, der Zeichnung und den Patentansprüchen zu entnehmen.

### Zeichnungen

Die vorliegende Erfindung wird durch die im Folgenden gezeigten und diskutierten Figuren und die nachfolgende Beschreibung genauer erläutert. Dabei ist zu beachten, dass die Figuren nur beschreibenden Charakter haben und nicht dazu gedacht sind, die Erfindung in irgendeiner Form einzuschränken.

Es zeigen
- Fig. 1: eine schematische Draufsicht auf einen erfindungsgemäßen Sensor;
- Fig. 2: einen Schnitt durch den Sensor nach Fig. 1 entlang der Linie II-II in Fig. 1;
- Fig. 3: einen Schnitt durch eine alternative Ausführungsform eines erfindungsgemäßen Sensors;
- Fig. 4: einen Schnitt durch eine weitere Ausführungsform eines erfindungsgemäßen Sensors;
- Fig. 5: Leitungswege bei einem Sensor nach Fig. 1;
- Fig. 6: ein Ersatzschaltbild für eine resistive Gleichstrommessung;
- Fig. 7: ein vereinfachtes Ersatzschaltbild für eine Impedanzmessmethode;
- Fig. 8: einen Graphen, in dem die zeitliche Veränderung des Signals eines unbeschichteten Sensors vereinfacht dargestellt ist;
- Fig. 9: einen Graphen, in dem die zeitliche Veränderung des Signals eines Sensors, der mit einer Schicht mit einem hohen Schichtwiderstand beschichtet ist, vereinfacht dargestellt ist, und
- Fig. 10: einen Graphen, in dem die zeitliche Veränderung des Signals eines Sensors, der mit einer Schicht mit einem niedrigen Schichtwiderstand beschichtet ist, vereinfacht dargestellt ist.

### Beschreibung der Ausführungsbeispiele

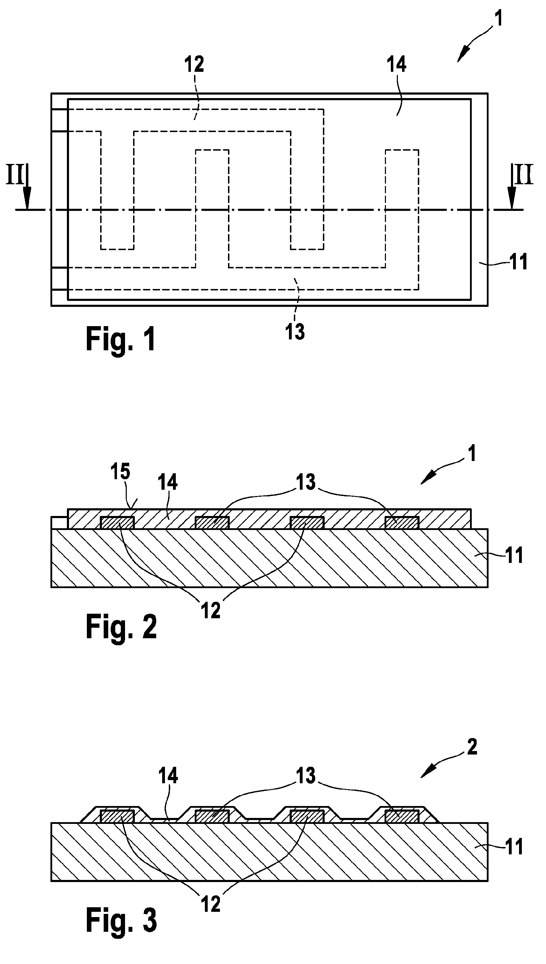

In den Fig. 1 und Fig. 2 ist ein Sensor 1 zur Detektion von Teilchen in einem Gasstrom dargestellt. Der Sensor 1 dient zum Einbau in einen Abgasstrang eines Kraftfahrzeuges und ist bevorzugt stromab eines Russfilters eines Kraftfahrzeuges mit einem Dieselverbrennungsmotor angeordnet.

Der Sensor 1 umfasst ein, beispielsweise als Substrat dienendes, plattenartiges Trägerelement 11, das aus einem hochisolierenden Werkstoff, beispielsweise aus einer Keramik wie Aluminiumoxid, gefertigt ist. Denkbar ist es auch, das Trägerelement 11 aus einem alternativen Werkstoff, wie dotiertem oder undotiertem Zirkoniumoxid, beispielsweise yttriumstabilisiertem Zirkoniumdioxid, zu fertigen.

Auf dem Trägerelement 11 ist eine Struktur aus zwei interdigitalen Kammelektroden 12 und 13 aufgedruckt, die beispielsweise aus Platin Pt gefertigt sind und über entsprechende Kontaktierungen mit einer Mess-, Steuer- und Auswertungsvorrichtung verbindbar sind.

Des Weiteren weist der Sensor 1 über den als Elektroden dienenden Kammelektroden 12 und 13 eine elektrisch leitfähige Schicht 14, deren Widerstandswert kleiner oder gleich dem Minimalwiderstandswert eines mit den zu detektierenden Teilchen 51 belegten Sensors gleicher Geometrie ohne elektrisch leitfähige Schicht kurz vor Beginn der Regeneration ist, auf, mit der die Elektroden 12 und 13 und das Trägerelement 11 überzogen sind. Die elektrisch leitfähige Schicht 14 ist beispielsweise aus einem ionen- und/oder elektronenleitenden Material gefertigt und weist einen Widerstandswert bei Raumtemperatur von ≥ 0,2 kΩ bis ≤ 100 kΩ auf. Beispielsweise weist das elektrisch leitfähige Material der elektrisch leitfähigen Schicht 14 eine spezifische elektrische Leitfähigkeit bei Raumtemperatur von ≥ 10⁻⁵ S/m bis ≤ 10 S/m auf. Die elektrisch leitfähige Schicht 14 umfasst beispielsweise dotiertes Zirkoniumoxid oder undotiertes Zirkoniumoxid mit einer Korngröße im nm-Bereich, dotiertes Aluminiumoxid, dotiertes oder undotiertes Rutheniumoxid, dotiertes oder undotiertes Indiumoxid, Siliciumcarbid, nitridgebundenes Siliciumcarbid, nitridgebundenes Siliciumaluminiumcarbid und/oder ein Delafossit als elektrisch leitfähiges Material.

In Fig. 3 ist eine alternative Ausführungsform eines erfindungsgemäßen Teilchensensors 2 dargestellt, der im Wesentlichen dem Sensor nach den Fig. 1 und

Fig. 2 entspricht, sich von diesem aber dadurch unterscheidet, dass er eine elektrisch leitfähige Schicht 14, aufweist, die über ihre gesamte Fläche eine im Wesentlichen konstante Dicke hat. Die Messfläche des Sensors 11 weist damit ein Profil auf.

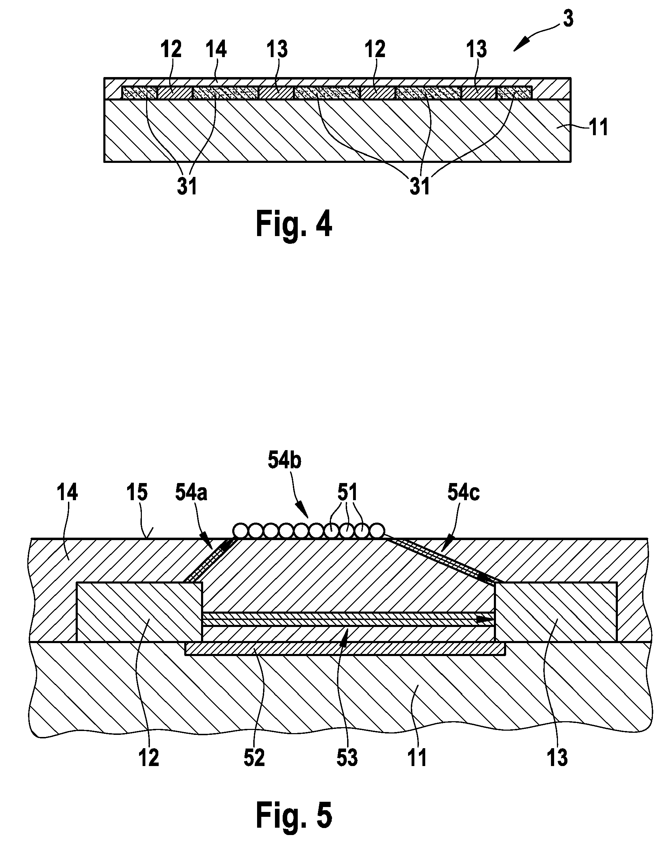

In Fig. 4 ist eine weitere Ausführungsform eines erfindungsgemäßen Sensors 3 dargestellt, der wiederum weitgehend dem Sensor nach den Fig. 1 und Fig. 2 entspricht, sich von diesem aber dadurch unterscheidet, dass er eine so genannte Füllschicht 31 aufweist, die in den Zwischenräumen zwischen den Elektroden 12 und 13 auf das Trägerelement 11 aufgebracht ist und die in etwa die gleiche Dicke wie die Elektroden 12 und 13 hat. Die Füllschicht 31 umfasst beispielsweise dotiertes Zirkoniumoxid oder undotiertes Zirkoniumoxid mit einer Korngröße im nm-Bereich, dotiertes oder undotiertes Aluminiumoxid, dotiertes oder undotiertes Rutheniumoxid, dotiertes oder undotiertes Indiumoxid, Siliciumcarbid, nitridgebundenes Siliciumcarbid, nitridgebundenes Siliciumaluminiumcarbid und/oder ein Delafossit. Sowohl die Füllschicht 31 als auch die Kammelektroden 12 und 13 sind mit der elektrisch leitfähigen Schicht 14, überzogen.

In Fig. 5 ist der Sensor nach den Fig. 1 und Fig. 2 während seines Betriebs in vereinfachter Weise dargestellt, und zwar derart, dass auf der Oberfläche 15 der elektrisch leitfähigen Schicht 14, Teilchen 51 abgelagert sind.

Die Elektroden 12 und 13 stehen über drei Pfade miteinander in elektrischer Verbindung, und zwar über einen ersten Pfad 52, der die Elektroden 12 und 13 durch das Trägerelement hindurch verbindet, über einen parallelen zweiten Pfad 53, der die Elektroden 12 und 13 durch die elektrisch leitfähige Schicht 14 hindurch verbindet, und über einen dritten Pfad 54a, 54b ,54c, der die Elektroden 12 und 13 durch den Teilchenpfad 54b, der auf der Oberfläche 15 abgelagerten Teilchen 51, und durch die zwischen den Elektroden 12, 13 und dem Teilchenpfad 54b angeordnete Teilbereiche 54a, 54c der elektrisch leitfähigen Schicht hindurch verbindet. Fig. 5 zeigt, dass die Widerstände R_{Schicht 1} und R_{Schicht 2} der jeweils über den Elektroden 12, 13 angeordneten Teilbereiche 54a, 54c der elektrisch leitfähigen Schicht abhängig vom Ort und von der Menge der angelagerten Teilchen 51, das heißt von der Länge der Teilchenpfade, sind. Lagern sich beispielsweise weitere Teilchen 51 in Richtung auf die Elektrode 13 hin an, so sinkt der Widerstand Schicht ₂ des über der Elektrode 13 angeordneten Bereichs 54c, während der Widerstand R_{Teilchen} des Teilchenpfads 54b steigt.

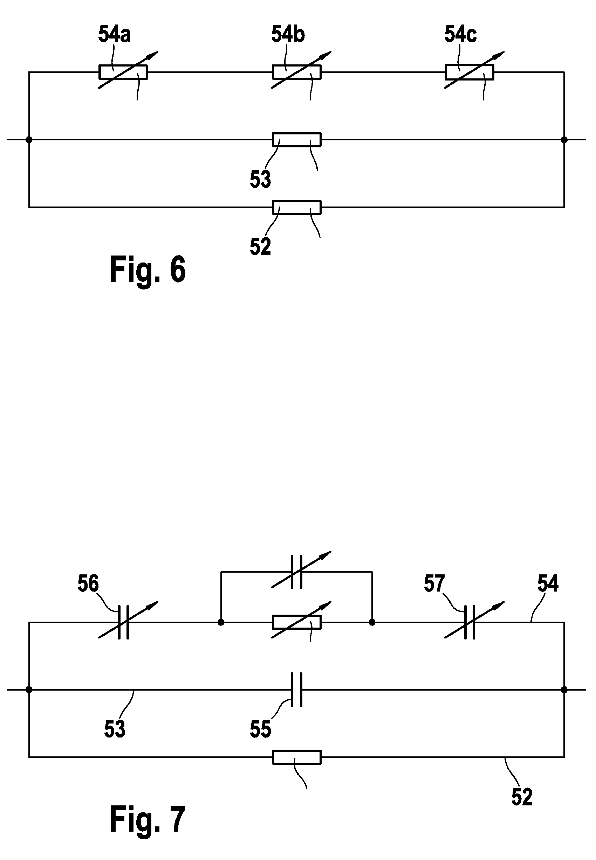

Die Widerstandsverhältnisse in diesem Sensor sind anhand des in Fig. 6 dargestellten, stark vereinfachten Ersatzschaltbildes gezeigt. In dem ersten Pfad 52 liegt ein Widerstand R_{Trägefelement} vor, der durch das Trägerelement 11 vorgegeben ist. In dem zweiten Pfad 53 liegt ein Widerstand R_{Schicht} vor, der durch das Material und die Ausgestaltung der elektrisch leitfähigen Schicht vorgegeben wird und beispielsweise geringer als der Widerstand R_{Trägerelement} des Trägerelementes 11 ist. In dem dritten Pfad 54a, 54b, 54c liegt ein Widerstand vor, der sich aus den Widerständen R_{Schicht 1} und R_{Schicht 2} der elektrisch leitfähige Schicht 14 innerhalb der Teilbereiche 54 a und 54c in der Nähe der Elektroden 12 und 13 sowie dem Widerstand R_{Teilchen} ergibt, der durch die Konzentration an Teilchen 51 auf der elektrisch leitfähigen Schicht 14 vorgegeben wird. Mit wachsender Länge der Teilchenpfade auf der elektrisch leitfähigen Schicht 14 vergrößert sich der Widerstand R_{Teilchen} während sich der Widerstand R_{Schicht 2} (wie in Fig. 5 und 6 dargestellt), oder gegebenenfalls auch der Widerstand R_{Schicht 1} (nicht in Fig. 5 und 6 dargestellt) verkleinert, woraus auf die Teilchenkonzentration in dem betreffenden Gas geschlossen werden kann. Die Widerstände R_{Trägerelement} und R_{Schicht} bleiben dabei konstant.

In Fig. 7 ist ein stark vereinfachtes Ersatzschaltbild dargestellt, das die Verhältnisse wiedergibt, wenn eine Impedanzmessung mit Wechselstromsignalen durchgeführt wird und eine erfindungsgemäße elektrisch leitfähige Schicht 14 aufweist. In diesem Falle bilden die Teilchen 51 ein Schaltungsglied mit veränderlichem Widerstand und veränderlicher Kapazität, d. h. ein Schaltungsglied nach Art eines RC-Glieds. Die Elektroden 12 und 13 bilden zusammen eine Kapazität 55, wobei das Trägerelement 11 als Dielektrikum wirkt. Die Elektrode 12 bildet zusammen mit den Teilchen 51 eine veränderliche Kapazität 56. Die Elektrode 13 bildet zusammen mit den Teilchen 51 eine veränderliche Kapazität 57.

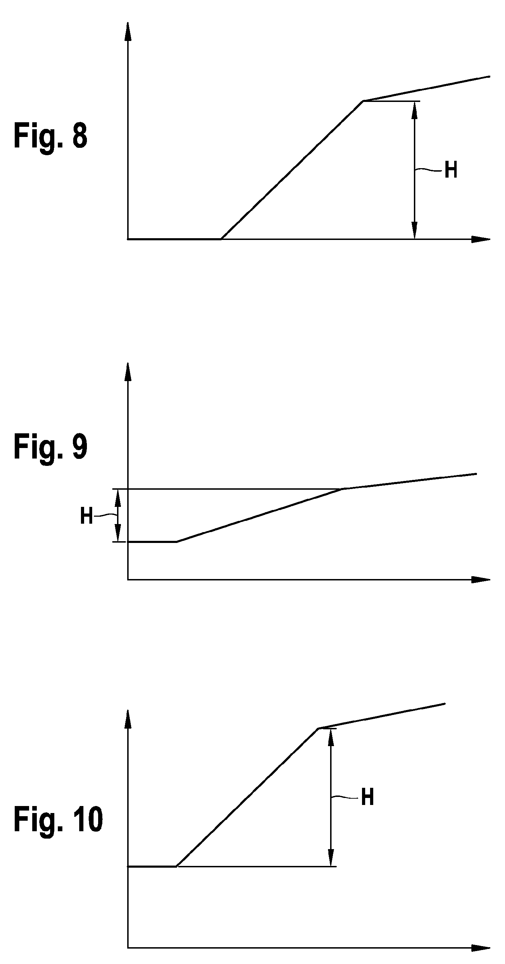

Fig. 8 ist ein Graph, in dem die zeitliche Veränderung des Signals eines herkömmlichen, unbeschichteten Sensors vereinfacht dargestellt ist. Fig. 8 zeigt, dass bei einem unbeschichteten Sensor zu Beginn der Messung kein Signal, das eine Aussage über die Teilchenkonzentration zulässt, vorliegt. Dies liegt darin begründet, dass erst ab dem Zeitpunkt an dem sich erste Teilchenpfade aus angelagerten Teilchen bilden, welche die Elektroden kurzschließen, ein Signal erhalten wird. Lagern sich nun weitere Teilchen an, erhöht sich das Signal proportional zu der Menge der im Folgenden angelagerten Teilchen. Wie Fig. 8 zeigt, wird ab einer bestimmten Menge von angelagerten Teilchen ein maximaler Signalhub H erreicht. Zu diesem Zeitpunkt wird üblicherweise die Regeneration des Sensors eingeleitet.

Fig. 9 ist ein Graph, in dem die zeitliche Veränderung des Signals eines Sensors, der mit einer Schicht mit einem hohen Schichtwiderstand beschichtet ist, vereinfacht dargestellt ist. Fig. 9 zeigt, dass bei einem Sensor, der mit einer Schicht mit einem hohen Schichtwiderstand beschichtet ist, schon zu einem früheren Zeitpunkt als bei einem unbeschichteten Sensor eine Messung eines Signals, das eine Aussage über die Teilchenkonzentration zulässt, möglich ist. Dabei ist theoretisch schon bei Anlagerung des ersten Teilchens die Messung eines Signals möglich. Praktisch wird auf Grund der Messgenauigkeit der bei der Messung eingesetzten Messvorrichtung/en, jedoch erst bei Erreichen einer kritischen Teilchenmenge ein Signal erhalten. Diese zum Erhalt eines Signals kritische Teilchenmenge ist jedoch deutlich geringer als die Teilchenmenge, die zum Bilden von kurzschließenden Teilchenpfaden notwendig ist. Eine Beschichtung mit einer Schicht mit einem hohen Schichtwiderstand hat jedoch den Nachteil, dass die Schicht mit einem hohen Schichtwiderstand als Strombegrenzung fungiert und daher der Signalhub H deutlich geringer als bei einem unbeschichteten Sensor ausfällt.

Fig. 10 ist ein Graph, in dem die zeitliche Veränderung des Signals eines Sensors, der mit einer Schicht mit einem niedrigen Schichtwiderstand beschichtet ist, vereinfacht dargestellt ist. Wie bei dem in Fig. 9 gezeigten Sensor, der mit einer Schicht mit einem hohen Schichtwiderstand beschichtet ist, ist auch bei einem erfindungsgemäßen Sensor, der mit einer Schicht mit einem niedrigen Schichtwiderstand beschichtet ist, schon zu einem früheren Zeitpunkt als bei einem unbeschichteten Sensor eine Messung eines Signals, das eine Aussage über die Teilchenkonzentration zulässt, möglich. Wie bereits im Zusammenhang mit Fig. 9 erläutert ist auch hier theoretisch bereits die Messung eines Signals bei der Anlagerung eines ersten Teilchens möglich. Auf Grund der Messgenauigkeit der bei der Messung eingesetzten Messvorrichtung/en wird jedoch erst bei Erreichen einer kritischen Teilchenmenge ein Signal erhalten, wobei diese kritische Teilchenmenge jedoch deutlich geringer ist als die Teilchenmenge, die zum Bilden von kurzschließenden Teilchenpfaden notwendig ist. Vorteilhafterweise fungiert eine Beschichtung mit einer Schicht mit einem niedrigen Schichtwiderstand nicht oder kaum als Strombegrenzung, weshalb der Signalhub H in etwa dem Signalhub H eines unbeschichteten Sensors (Fig. 8) entspricht.

Gegenstand der vorliegenden Erfindung ist ein Sensor zur Detektion von Teilchen in einem Gasstrom umfassend
- ein Elektrodensystem mit mindestens zwei Elektroden,
- welches auf einem Trägerelement angeordnet ist, wobei
- mindestens zwei Elektroden des Elektrodensystems von einer elektrisch leitfähigen Schicht (14) überzogen sind,
dadurch gekennzeichnet, dass
- die elektrisch leitfähige Schicht (14) einen Widerstandswert aufweist, der kleiner oder gleich dem Minimalwiderstandswert eines mit den zu detektierenden Teilchen (51) beladenen Sensors gleicher Geometrie ohne elektrisch leitfähige Schicht kurz vor Beginn der Regeneration ist.

Dabei werden unter dem Begriff "Teilchen" im Sinn der vorliegenden Erfindung feste und/oder flüssige leitfähige Teilchen, beispielsweise leitfähige Partikel und/oder Tröpfchen, insbesondere Rußpartikel, verstanden.

Dabei wird der Widerstandswert der elektrisch leitfähigen Schicht durch Vergleich des Widerstandswertes eines mit Teilchen beladenen Sensorelementes ohne elektrisch leitfähige Schicht mit dem Widerstandswert eines unbeladenen Sensorelementes mit elektrisch leitfähiger Schicht, welches den gleichen Aufbau wie das Sensorelement ohne elektrisch leitfähige Schicht aufweist, ermittelt, wobei die Widerstandswerte in beiden Fällen durch das gleiche Messprinzip bestimmt werden.

Da der Widerstandswert der elektrisch leitfähigen Schicht von der Geometrie des Elektrodensystems abhängig ist, muss die Ausgestaltung der elektrisch leitfähigen Schicht und die Auswahl des elektrisch leitfähigen Materials auf das entsprechende Elektrodensystem angepasst werden.

Dies kann zum einen empirisch erfolgen, das heißt indem zunächst eine elektrisch leitfähige Schicht eines elektrisch leitfähigen Materials mittels Siebdruckverfahren aufgetragen, gegebenenfalls gesintert, und der resultierende Widerstandswert gemessen wird. Falls der Widerstandswert der elektrisch leitenden Schicht nicht in dem erfindungsgemäßen Widerstandsbereich liegt, kann beispielsweise einerseits das elektrisch leitfähige Material verändert werden oder andererseits die Schichtdicke durch das Auftragen weiteren elektrisch leitfähigen Materials sukzessiv vergrößert werden bis ein Widerstandswert, der in dem erfindungsgemäßen Widerstandsbereich liegt, erreicht wird. Zum anderen kann die Ausgestaltung einer elektrisch leitfähigen Schicht mit einem erfindungsgemäßen Widerstandswert zumindest näherungsweise über mathematische Methoden bestimmt werden.

Der Minimalwiderstandswert der zu detektierenden Teilchen lässt sich durch die Anlagerungsspannung eines Teilchensensors ohne elektrisch leitfähige Schicht und den Wert des Stromflusses, der kurz vor der Regeneration durch die Teilchen fließt bestimmen.

Beispielsweise, wenn bei einem herkömmlichen Rußsensor ohne elektrisch leitfähige Schicht bei einer Anlagerungsspannung von 30 V ein Stromfluss durch die Rußteilchen von bis zu einigen mA, insbesondere von 1 mA, vorliegt, ergibt sich aus 30 V und 1 mA ein Minimalwiderstandswert der zu detektierenden Teilchen von 30 kΩ. Im Fall eines derartigen Sensors könnte die elektrisch leitfähige Schicht beispielsweise einen Widerstandswert von ≤ 30 kΩ aufweisen.

Die Erfindung beruht auf dem Prinzip, dass an die Elektroden des Elektrodensystems eine Messspannung angelegt wird, wodurch sich ein Messstrom durch die elektrisch leitfähige Schicht einstellt. Durch die Anlagerung von Teilchen entsteht ein weiterer Strompfad durch die angelagerten Teilchen und durch die zwischen den angelagerten Teilchen und den Elektroden befindlichen Teilbereiche der elektrisch leitfähigen Schicht, welcher den Messstrom erhöht und als Maß für die Konzentration an Teilchen ausgegeben werden kann. Dadurch, dass der elektrische Widerstand der elektrisch leitfähigen Schicht kleiner oder gleich dem Minimalwiderstandswert der zu detektierenden Teilchen (51) ist, wird einem niedrigen Widerstand der elektrisch leitfähigen Schicht ein großer Widerstand der zu detektierenden Teilchen parallel geschaltet, wodurch der Gesamtwiderstand sinkt und der Stromfluss durch die Teilchen vorteilhafterweise vom Widerstand der angelagerten Teilchen und nicht vom Widerstand der elektrisch leitfähigen Schicht begrenzt wird. Eine elektrisch leitfähige Schicht mit einem Widerstandswert der kleiner oder gleich dem Minimalwiderstandswert der zu detektierenden Teilchen ist, fungiert daher vorteilhafterweise nicht als Strombegrenzung, weshalb der Signalhub eines erfindungsgemäßen Sensors in etwa dem Signalhub eines unbeschichteten Sensors entspricht. Dieses Prinzip hat sich darüber hinaus im Rahmen der vorliegenden Erfindung als besonders vorteilhaft herausgestellt, da es im Gegensatz zu herkömmlichen Sensoren nicht mehr notwendig ist den Zeitpunkt abzuwarten, an dem die Elektroden durch sich anlagernde Teilchen kurzgeschlossen werden, sondern zu einem früheren Zeitpunkt ein gültiges Messsignal erhalten werden kann.

Die elektrisch leitfähige Schicht des Sensors ist gemäß der Erfindung bei einer vorteilhaften Ausführungsform aus einem ionen- und/oder elektronenleitenden Material gefertigt.

Die elektrisch leitfähige Schicht weist bei Raumtemperatur einen Widerstandswert von ≥ 0,2 kΩ, insbesondere von ≥ 0,3 kΩ, auf. Vorzugsweise weist die elektrisch leitfähige Schicht bei Betriebstemperatur einen Widerstandswert von ≥ 0,2 kΩ bis ≤ 100 kΩ, beispielsweise von ≥ 0,3 kΩ bis ≤ 70 kΩ, insbesondere von ≥ 10 kΩ bis ≤ 50 kΩ, auf. Dabei wird unter dem Begriff "Betriebstemperatur" im Sinn der vorliegenden Erfindung eine Temperatur in einem Bereich von ≥ 100°C bis ≤ 500 °C, insbesondere in einem Bereich von > 200 °C bis ≤ 400 °C, verstanden.

Beispielsweise weist das elektrisch leitfähige Material der elektrisch leitfähigen Schicht eine spezifische elektrische Leitfähigkeit bei Raumtemperatur von ≥ 10⁻⁵ S/m auf. Vorzugsweise weist das elektrisch leitfähige Material der elektrisch leitfähigen Schicht eine elektrische Leitfähigkeit bei Betriebstemperatur von ≥ 10⁻⁵ S/m bis ≤ 10 S/m, beispielsweise von ≥ 10⁻⁴ S/m bis ≤ 1 S/m, insbesondere von ≥ 10⁻³ S/m bis ≤ 10⁻¹ S/m, auf.

Beispielsweise umfasst die elektrisch leitfähige Schicht als elektrisch leitfähiges Material dotiertes Zirkoniumoxid oder undotiertes Zirkoniumoxid mit einer Korngröße im nm-Bereich, dotiertes Aluminiumoxid, dotiertes oder undotiertes Rutheniumoxid, dotiertes oder undotiertes Indiumoxid, Siliciumcarbid (SiC), nitridgebundenes Siliciumcarbid (SiNC), nitridgebundenes Siliciumaluminiumcarbid (SiAlNC) und/oder ein Delafossit. Insbesondere umfasst die elektrisch leitfähige Schicht als elektrisch leitfähiges Material undotiertes Zirkoniumdioxid mit einer Korngröße im nm-Bereich oder Yttrium-dotiertes Zirkoniumdioxid, Fe₂O₃⁻, MnO- und/oder MgO-dotiertes Aluminiumoxid, Rutheniumdioxid, zinndotiertes Indiumoxid (beispielsweise In₂O₃:SnO₂), Siliciumcarbid, nitridgebundenes Siliciumcarbid, nitridgebundenes Siliciumaluminiumcarbid und/oder ein Delafossit der allgemeinen Formel AMO₂, in der A beispielsweise für Cu und/oder Ag und M beispielsweise für Al, Ga und/oder In steht. Grundsätzlich kann aber jedes Material eingesetzt werden, das die bei dem jeweiligen Anwendungsfall erforderlichen Eigenschaften aufweist.

Im Rahmen einer Ausführungsform der Erfindung umfasst die elektrisch leitfähige Schicht neben dem elektrisch leitfähigen Material weiterhin ein nicht-elektrisch leitfähiges Material, beispielsweise als Matrixmaterial. Beispielsweise können undotiertes Aluminiumoxid, insbesondere Aluminiumdioxid, undotiertes Zirkoniumoxid, insbesondere Zirkoniumdioxid, und/oder Glas im Rahmen der vorliegenden Erfindung als nicht-elektrisch leitfähiges Material eingesetzt werden. So kann die elektrisch leitfähige Schicht aus einem elektrisch leitfähigen und einem nicht-elektrisch leitfähigen Grundmaterial, beispielsweise aus dotiertem Zirkoniumoxid, dotiertem Aluminiumoxid, dotiertem oder undotiertem Rutheniumoxid, dotiertem oder undotiertem Indiumoxid, Siliciumcarbid, nitridgebundenes Siliciumcarbid, nitridgebundenes Siliciumaluminiumcarbid und/oder einem Delafossit, insbesondere Yttrium-dotiertem Zirkoniumdioxid, Fe₂O₃-, MnO- und/oder MgO-dotiertem Aluminiumoxid, Rutheniumdioxid, zinndotiertem Indiumoxid (beispielsweise In₂O₃:SnO₂), Siliciumcarbid, nitridgebundenes Siliciumcarbid, nitridgebundenem Siliciumaluminiumcarbid und/oder einem Delafossit der allgemeinen Formel AMO₂, in der A beispielsweise für Cu und/oder Ag und M beispielsweise für Al, Ga und/oder In steht, als elektrisch leitfähiges Material und undotiertem Aluminiumoxid, undotiertem Zirkoniumoxid und/oder Glas als nicht-elektrisch leitfähiges Material, hergestellt sein. Durch gezieltes Mischen der Grundmaterialien kann die Leitfähigkeit bzw. der elektrische Widerstand der elektrisch leitfähigen Schicht gezielt eingestellt und hinsichtlich der zu detektierenden Teilchen optimiert werden.

Die elektrisch leitfähige Schicht des Sensors kann sowohl hinsichtlich ihrer Zusammensetzung als auch hinsichtlich ihrer Oberflächenbeschaffenheit so eingestellt sein, dass sich nur spezielle Teilchen, wie Russpartikel, anlagern, wohingegen unerwünschte Teilchen, wie beispielsweise Sulfate oder Phosphate, abgestoßen werden. Dies kann beispielsweise dadurch realisiert werden, dass die elektrisch leitfähige Schicht bzw. deren Oberfläche einen möglichst unpolaren Charakter hat. Darüber hinaus kann durch die elektrisch leitfähige Schicht an der dem Gasstrom ausgesetzten Seite des Sensors auch die Oberflächenbeschaffenheit für die Anlagerung der Teilchen, insbesondere von Russ, vereinheitlicht werden, was sich gegenüber den bisherigen Sensoren mit einer zwischen Metall und Dielektrikum wechselnden Oberfläche als vorteilhaft erwiesen hat.

Die mindestens zwei Elektroden des Elektrodensystems können kammartig ineinander greifen. Beispielsweise handelt es sich bei den Elektroden des Elektrodensystems um Interdigitalelektroden, insbesondere interdigitale Kammelektroden. Ein interdigitales Elektrodensystem aus mindestens zwei Interdigitalelektroden kann auf einfache Weise durch Verfahren wie Siebdruckverfahren auf eine darunter liegenden Schicht, beispielsweise auf das Trägerelement, aufgedruckt werden. Im Rahmen der vorliegenden Erfindung hat es sich als vorteilhaft erwiesen, wenn die Elektroden als Interdigitalelektroden auf einer Fläche des Trägerelements angeordnet sind, da hierdurch besonders günstige Messergebnisse erreicht werden können. Wenn es sich bei den Elektroden des Elektrodensystems um Interdigitalelektroden handelt, liegen diese zweckmäßigerweise in einer Ebene. Bei dem Elektrodenmaterial handelt es sich beispielsweise um Metalle wie Platin, Ruthenium, Gold oder Kupfer, wobei Platin bevorzugt wird. Vorzugsweise weist das Elektrodensystem eine Schichtdicke in einem Bereich von ≥ 1 µm bis ≤ 100 µm, beispielsweise von ≥ 2 µm bis ≤ 50 µm, insbesondere von ≥ 5 µm bis ≤ 40 µm, auf.

Die elektrisch leitfähige Schicht überzieht beispielsweise die Elektroden und die von den Elektroden nicht bedeckte Fläche des Trägerelements. Beispielsweise kann die elektrisch leitfähige Schicht über dem Elektrodensystem und dem Trägerelement angeordnet sein und der durch die Elektroden des Elektrodensystems vorgegebenen, beispielsweise burgzinnen-förmigen, Kontur folgen. Somit erhält man ein günstiges Verhältnis zwischen dem Grundsignal, bei dem keine angelagerten Teilchen vorliegen, und dem Messsignal, bei dem angelagerte Teilchen vorliegen.

Um eine vollständige Bedeckung der Kanten der Elektroden zu gewährleisten, kann des weiteren zwischen den beiden Elektroden eine Füllschicht, beispielsweise auf dem Trägerelement, angeordnet sein, deren Dicke im wesentlichen derjenigen der Elektroden entspricht. Die Füllschicht kann aus dem gleichen Material wie die elektrisch leitfähige Schicht, aber auch aus einem anderen Material gefertigt sein. Beispielsweise kann die elektrisch leitfähige Schicht die Bereiche zwischen den Elektroden, insbesondere den Elektrodenfingern des Elektrodensystems, das heißt die Füllschicht, vollständig ausfüllen, sodass die elektrisch leitfähige Schicht gemeinsam mit den Elektroden des Elektrodensystems eine einheitliche Schicht ausbildet.

Das Trägerelement des Sensors kann im Rahmen der vorliegenden Erfindung eine Trägerschicht, insbesondere eine Trägerfolie, sein. Beispielsweise umfasst das erfindungsgemäße Trägerelement undotiertes Aluminiumoxid und/oder undotiertes oder dotiertes Zirkoniumoxid. Insbesondere umfasst das erfindungsgemäße Trägerelement undotiertes Aluminiumdioxid und/oder undotiertes oder Yttrium-dotiertes Zirkoniumdioxid. Vorzugsweise weist das Trägerelement eine Schichtdicke in einem Bereich von ≥ 100 µm bis ≤ 2,5 mm auf.

Zur Reinigung der dem Gasstrom ausgesetzten Fläche und zum Entfernen der angelagerten Teilchen, wie Russpartikeln, kann der erfindungsgemäße Sensor des Weiteren mit einer integrierten oder separaten Heizvorrichtung versehen sein.

Die Fertigung eines erfindungsgemäßen Sensors, d. h. das Aufbringen der Elektroden, der elektrisch leitfähigen Schicht und gegebenenfalls der Füllschicht, kann nach einem Siebdruckverfahren erfolgen, was aus Kostengründen vorteilhaft ist. Ferner ist es zweckmäßig, wenn die elektrisch leitfähige Schicht nach einem Cofire-Prozess gefertigt werden kann. Jedoch ist es auch denkbar, die elektrisch leitfähige Schicht nach einem Postfire-Prozess herzustellen.

Ein weiterer Gegenstand der vorliegenden Erfindung ist ein Verfahren zur Herstellung eines Sensors, das dadurch gekennzeichnet ist, dass ein elektrisch leitfähiges Material oder ein elektrisch leitfähiges Material und ein nicht-elektrisch leitfähiges Material beispielsweise in eine Siebdruckpaste gemischt werden und die Elektroden und/oder das Trägerelement eines Sensors mit Hilfe eines Siebdruckverfahren mit der resultierenden Mischung überzogen werden. Beispielsweise kann eine erfindungsgemäße elektrisch leitfähige Schicht durch Mischen von zinndotiertem Indiumoxid und Aluminiumoxid in einer Siebdruckpaste und anschließendem Aufbringen der Siebdruckmasse mit Hilfe eines Siebdruckverfahrens auf die Elektroden und/oder das Trägerelement des erfindungsgemäßen Sensors hergestellt werden. Vorteilhafterweise kann durch das Mischen eines elektrisch leitfähigen Material und eines nicht-elektrisch leitfähigen Materials die elektrische Leitfähigkeit der elektrisch leitfähigen Schicht des erfindungsgemäßen Sensors gezielt eingestellt werden.

Ein weiterer Gegenstand der vorliegenden Erfindung ist die Verwendung eines erfindungsgemäßen Sensors in einem Werkstattmessgerät zur Abgasuntersuchung oder in einem Messgerät zur Kontrolle der Luftqualität oder zur Überwachung der Betriebsweise eines Verbrennungsmotors, beispielsweise eines Dieselmotors, oder einer Verbrennungsanlage, beispielsweise einer Ölheizung, oder zur Überwachung der Funktionsfähigkeit eines Partikelfilters und/oder des Beladungszustandes eines Partikelfilters oder zur Überwachung von chemischen Herstellungsprozessen, Abluftanlagen und/oder Abluftnachbehandlungsanlagen.

## Patentansprüche

1. Sensor zur Detektion von Teilchen (51) in einem Gasstrom umfassend
- ein Elektrodensystem mit mindestens zwei Elektroden (12,13),
- welches auf einem Trägerelement (11) angeordnet ist, wobei
- mindestens zwei Elektroden (12, 13) des Elektrodensystems von einer elektrisch leitfähigen Schicht (14) überzogen sind,
**dadurch gekennzeichnet, dass**
- die elektrisch leitfähige Schicht (14) bei Betriebstemperatur, also bei einer Temperatur in einem Bereich ≥ 100°C bis ≤ 500°C, einen Widerstandswert von ≤ 0,2 kΩ bis ≤ 100 kΩ aufweist.

2. Sensor nach Anspruch 1, **dadurch gekennzeichnet, dass** die die elektrisch leitfähige Schicht (14) aus einem ionen- und/oder elektronenleitenden Material gefertigt ist.

3. Sensor nach einem der vorherigen Ansprüche, **dadurch gekennzeichnet, dass** das elektrisch leitfähige Material der elektrisch leitfähigen Schicht (14) bei Betriebstemperatur eine elektrische Leitfähigkeit von ≥ 10⁻⁵ S/m bis ≤ 10 S/m aufweist.

4. Sensor nach einem der vorherigen Ansprüche, **dadurch gekennzeichnet, dass** die elektrisch leitfähige Schicht (14) dotiertes Zirkoniumoxid oder undotiertes Zirkoniumoxid mit einer Korngröße im nm-Bereich, dotiertes Aluminiumoxid, dotiertes oder undotiertes Rutheniumoxid, dotiertes oder undotiertes Indiumoxid, Siliciumcarbid, nitridgebundenes Siliciumcarbid, nitridgebundenes Siliciumaluminiumcarbid und/oder ein Delafossit als elektrisch leitfähiges Material umfasst.

5. Sensor nach einem der vorherigen Ansprüche, **dadurch gekennzeichnet, dass** die Elektroden (12, 13) interdigitale Kammelektroden sind.

6. Sensor nach einem der vorherigen Ansprüche, **dadurch gekennzeichnet, dass** zwischen den beiden Elektroden (12, 13) eine Füllschicht (31) angeordnet ist, deren Dicke in etwa derjenigen der Elektroden (12, 13) entspricht.

7. Sensor nach einem der vorherigen Ansprüche, **dadurch gekennzeichnet, dass** die elektrisch leitfähige Schicht (14) weiterhin ein nicht-elektrisch leitfähiges Material umfasst.

8. Verfahren zur Herstellung eines Sensors nach einem der Ansprüche 1 bis 7, **dadurch gekennzeichnet, dass** ein elektrisch leitfähiges Material oder ein elektrisch leitfähiges Material und ein nicht-elektrisch leitfähiges Material in eine Siebdruckpaste gemischt werden und die Elektroden (12, 13) und/oder das Trägerelement (11) eines Sensors (1; 2; 3) mit Hilfe eines Siebdruckverfahren mit der resultierenden Mischung überzogen werden.

9. Verwendung eines Sensors nach einem der Ansprüche 1 bis 7 in einem Werkstattmessgerät zur Abgasuntersuchung oder in einem Messgerät zur Kontrolle der Luftqualität oder zur Überwachung der Betriebsweise eines Verbrennungsmotors oder einer Verbrennungsanlage oder zur Überwachung der Funktionsfähigkeit eines Partikelfilters und/oder des Beladungszustandes eines Partikelfilters oder zur Überwachung von chemischen Herstellungsprozessen, Abluftanlagen und/oder Abluftnachbehandlungsanlagen.

## Claims

1. Sensor for detecting particles (51) in a gas flow, comprising
- an electrode system with at least two electrodes (12, 13),
- which is arranged on a carrier element (11),
- at least two electrodes (12, 13) of the electrode system being covered by an electrically conductive layer (14),
**characterized in that**
- the electrically conductive layer (14) has at operating temperature, that is to say at a temperature in a range from ≥ 100°C to ≤ 500°C, a resistance value of ≥ 0.2 kΩ to ≤ 100 kΩ.

2. Sensor according to Claim 1, **characterized in that** the electrically conductive layer (14) is produced from an ion- and/or electron-conducting material.

3. Sensor according to one of the preceding claims, **characterized in that** the electrically conductive material of the electrically conductive layer (14) has at operating temperature an electrical conductivity of ≥ 10⁻⁵ S/m to ≤ 10 S/m.

4. Sensor according to one of the preceding claims, **characterized in that** the electrically conductive layer (14) comprises doped zirconium oxide or undoped zirconium oxide with a particle size in the nm range, doped aluminium oxide, doped or undoped ruthenium oxide, doped or undoped indium oxide, silicon carbide, nitride-bonded silicon carbide, nitride-bonded silicon aluminium carbide and/or a delafossite as the electrically conductive material.

5. Sensor according to one of the preceding claims, **characterized in that** the electrodes (12, 13) are interdigital comb electrodes.

6. Sensor according to one of the preceding claims, **characterized in that** between the two electrodes (12, 13) there is arranged a filling layer (31), the thickness of which corresponds approximately to that of the electrodes (12, 13).

7. Sensor according to one of the preceding claims, **characterized in that** the electrically conductive layer (14) also comprises an electrically non-conductive material.

8. Method for producing a sensor according to one of Claims 1 to 7, **characterized in that** an electrically conductive material or an electrically conductive material and an electrically nonconductive material is/are mixed into a screen-printing paste and the electrodes (12, 13) and/or the carrier element (11) of a sensor (1; 2; 3) are coated with the resultant mixture with the aid of a screen-printing process.

9. Use of a sensor according to one of Claims 1 to 7 in a workshop measuring device for exhaust gas investigation or in a measuring device for checking air quality or for monitoring the operation of an internal combustion engine or a combustion system or for monitoring the functional capability of a particle filter and/or the loading state of a particle filter or for monitoring chemical production processes, exhaust air systems and/or exhaust air aftertreatment systems.

## Revendications

1. Capteur destiné à la détection de particules (51) dans un flux de gaz, comprenant
- un système d'électrodes pourvu d'au moins deux électrodes (12, 13),
- lequel est disposé sur un élément porteur (11),
- au moins deux électrodes (12, 13) du système d'électrodes étant recouvertes d'une couche (14) électriquement conductrice,
**caractérisé en ce que**
- la couche (14) électriquement conductrice présente une valeur de résistance de ≥ 0,2 kΩ à ≤ 100 kΩ à la température de service, c'est-à-dire à une température dans une plage de ≥ 100 °C à ≤ 500 °C.

2. Capteur selon la revendication 1, **caractérisé en ce que** la couche (14) électriquement conductrice est fabriquée à partir d'un matériau conducteur d'ions et/ou d'électrons.

3. Capteur selon l'une des revendications précédentes, **caractérisé en ce que** le matériau électriquement conducteur de la couche (14) électriquement conductrice présente une conductivité électrique de ≥ 10⁻⁵ S/m à ≤ 10 S/m à la température de service.

4. Capteur selon l'une des revendications précédentes, **caractérisé en ce que** la couche (14) électriquement conductrice comprend comme matériau électriquement conducteur de l'oxyde de zirconium dopé ou de l'oxyde de zirconium non dopé ayant une granulométrie dans la gamme des nm, de l'oxyde d'aluminium dopé, de l'oxyde de ruthénium dopé ou non dopé, de l'oxyde d'indium dopé ou non dopé, du carbure de silicium, du carbure de silicium lié au nitrure, du carbure de silicium/aluminium lié au nitrure et/ou une délafossite.

5. Capteur selon l'une des revendications précédentes, **caractérisé en ce que** les électrodes (12, 13) sont des électrodes en peigne interdigitées.

6. Capteur selon l'une des revendications précédentes, **caractérisé en ce qu'**une couche de remplissage (31) est disposée entre les deux électrodes (12, 13), dont l'épaisseur correspond approximativement à celle des électrodes (12, 13).

7. Capteur selon l'une des revendications précédentes, **caractérisé en ce que** la couche (14) électriquement conductrice comprend en outre un matériau non électriquement conducteur.

8. Procédé de fabrication d'un capteur selon l'une des revendications 1 à 7, **caractérisé en ce qu'**un matériau électriquement conducteur ou un matériau électriquement conducteur et un matériau non électriquement conducteur sont mélangés dans une pâte à sérigraphie et les électrodes (12, 13) et/ou l'élément porteur (11) d'un capteur (1 ; 2 ; 3) sont recouverts du mélange résultant à l'aide d'un procédé de sérigraphie.

9. Utilisation d'un capteur selon l'une des revendications 1 à 7 dans un appareil de mesure d'atelier pour l'analyse des gaz d'échappement ou dans un appareil de mesure pour le contrôle de la qualité de l'air ou pour la surveillance du mode de fonctionnement d'un moteur à combustion interne ou d'un équipement de combustion ou pour la surveillance de l'aptitude au fonctionnement d'un filtre à particules et/ou de l'état de charge d'un filtre à particules ou pour la surveillance de processus de fabrication chimiques, d'équipements d'évacuation d'air et/ou d'équipements de post-traitement d'air évacué.
